Europäisches Patentamt

(19) European Patent Office

Office européen des brevets

(11) Veröffentlichungsnummer: **0 049 502**
**B1**

(12) **EUROPÄISCHE PATENTSCHRIFT**

(45) Veröffentlichungstag der Patentschrift:
21.11.84

(21) Anmeldenummer: 81107878.1

(22) Anmeldetag: 03.10.81

(51) Int. Cl.³: **B 60 Q 1/30**

(54) Rückleuchten-Kombination, insbesondere für Anhänger von Kraftfahrzeugen.

(30) Priorität: **07.10.80 DE 8026763 U**

(43) Veröffentlichungstag der Anmeldung:
**14.04.82 Patentblatt 82/15**

(45) Bekanntmachung des Hinweises auf die Patenterteilung:
**21.11.84 Patentblatt 84/47**

(84) Benannte Vertragsstaaten:
**BE FR IT NL**

(56) Entgegenhaltungen:
**DE - A - 1 925 432**
**DE - A - 2 627 340**
**DE - B - 1 079 976**

(73) Patentinhaber: **Westfalia-Werke Franz Knöbel & Söhne KG, Am Sandberg 45, D-4840 Rheda-Wiedenbrück (DE)**

(72) Erfinder: **Braun, Dieter, Robert-Schumann-Strasse 6, D-4840 Rheda-Wiedenbrück (DE)**
Erfinder: **Koglin, Klaus, Flurstrasse 16, D-4410 Warendorf (DE)**

(74) Vertreter: **Meldau, Gustav, Dipl.-Ing. et al, Vennstrasse 9, D-4830 Gütersloh 1 (DE)**

BUNDESDRUCKEREI BERLIN

**Beschreibung**

Die Erfindung bezieht sich auf eine Rückleuchten-Kombination, insbesondere für Anhänger von Kraftfahrzeugen, mit einem Rückstrahler, der aus einem gleichseitigen Dreieck besteht, mit einer, die Basis bildenden, waagerecht liegenden Unterkante und einem daneben angeordneten rechteckigen Lichtkasten.

Insbesondere bei Anhängern von Kraftfahrzeugen bestehen Vorschriften, die dahingehen, daß auf der Rückseite des Fahrzeuges Rückstrahler angeordnet sind neben den vorschriftsmäßigen Rückleuchten, so daß auch bei abgestelltem Fahrzeug oder dann, wenn die Energieversorgung des Fahrzeuges unterbrochen ist durch das in den Rückstrahlern reflektierte Licht, das Fahrzeug von der Rückseite erkennbar ist.

Insbesondere bei Anhängern von Kraftfahrzeugen, die nach den Verkehrsvorschriften auf der Rückseite mit zwei verhältnismäßig großen, dreieckigen Rückstrahlern ausgestattet sein müssen, besteht hinsichtlich der Kombination mit den Leuchten und auch mit dem Nummernschild eine gewisse Schwierigkeit, insofern, als für die Anordnung dieser verschiedenen Ausführungsteile bestimmte Abstände von der Seitenbegrenzung und von der Straßenoberfläche vorgeschrieben sind, andererseits aber auch der Konstrukteur und auch der Halter des Fahrzeuges wünscht, daß die Rückseite des Fahrzeuges so gut wie möglich zugänglich bleibt für die Beladung oder auch die Ausbildung des Fahrzeugaufbaus, insbesondere bei Sonderaufbauten.

Hier setzt der Gedanke der Erfindung ein, nach der eine Rückleuchten-Kombination der gattungsgemäßen Art dadurch gekennzeichnet ist, daß mindestens eine Kante des Lichtkastens in gleicher waagerechter Ebene mit einer Höhenbegrenzung des Rückstrahlers liegt und das Abdeckglas des Lichtkastens, dessen rechteckige Begrenzung übergreifend, von einer, mit der benachbarten schräg verlaufenden Kante des Rückstrahlers parallelen Kante begrenzt ist. Es wird dadurch einerseits erreicht, daß Rückstrahler und Rückleuchten eine zusammengefaßte Einheit bilden und so einfach und raumsparend anzubringen sind, andererseits ist auch eine optische Zusammenfassung vorhanden, insofern, als durch die den Lichtkasten bis zum Rückstrahler übergreifende Abdeckung nicht nur eine Integration dieser beiden Bestandteile erreicht ist, sondern auch das von den Leuchten im Lichtkasten austretende Licht innerhalb der übergreifenden Abdeckung sich noch weiter verbreitet, so daß die eigentliche abstrahlende Fläche vergrößert ist. Dabei ist jedoch vermieden, daß für eine spezielle Leuchte besondere Aufwendungen erforderlich werden, denn rechteckige Lichtkästen, in denen die Rückleuchten untergebracht sind, sind seit langem serienmäßig auf dem Markt.

Nach einer vorteilhaften Weiterbildung ist bei waagerechter Anordnung des rechteckigen Lichtkastens das übergreifende Abdeckglas durch die waagerechten Ebenen begrenzt, die mit der Höhenbegrenzung des Rückstrahlers übereinstimmen. Dadurch wird eine einheitliche Begrenzung von Rückstrahler und Rückleuchten erreicht, die eine Anbringung auf dem geringstmöglichen Raum zulassen, wobei gleichzeitig die Möglichkeit besteht, bestimmte Leuchten in dem Lichtkasten, beispielsweise das Stopplicht so weit wie möglich entfernt von der Fläche des Rückstrahlers anzubringen.

Der rechteckige Lichtkasten ist vorteilhaft als Mehrkammer-Lichtkasten ausgebildet, und es können auch nach einer besonders zweckmäßigen Weiterbildung beiderseits des Rückstrahlers rechteckige Lichtkästen angeordnet sein. Durch diese Maßnahme sind die verschiedenen Rückleuchten für Bremslicht, Richtungsanzeiger, Warnlicht und Schlußlicht usw. eng zusammengefaßt. Dabei ist erreicht, daß die äußere Begrenzung der zusammengefaßten Rücklicht-Rückstrahlerkombination ein flaches Rechteck bildet, das sich besonders günstig und vorteilhaft an der Rückseite eines Fahrzeuges anbringen läßt, insbesondere dann, wenn eine gleiche Ausbildung auf beiden Seiten des Fahrzeuges vorgesehen ist. Bei der Anordnung eines Lichtkastens beiderseits des Rückstrahlers lassen sich auch noch zusätzliche weitere Leuchten unterbringen bei Ausbildung des Lichtkastens als Zweikammerkasten oder als Dreikammerkasten, und zwar neben den ohnehin vorgeschriebenen Leuchten, beispielsweise Rückfahrscheinwerfer und Nebelleuchten.

Die Erfindung wird nachstehend anhand von Ausführungsbeispielen mit Bezug auf die Zeichnungen näher erläutert. In den Zeichnungen zeigen

Fig. 1 die Rückansicht eines Fahrzeuges mit Rückleuchten und Rückstrahlern,

Fig. 2 Darstellung einer Kombination von Rückleuchte und Rückstrahler,

Fig. 3 Darstellung einer anderen Ausführungsform einer solchen Kombination entsprechend Fig. 2.

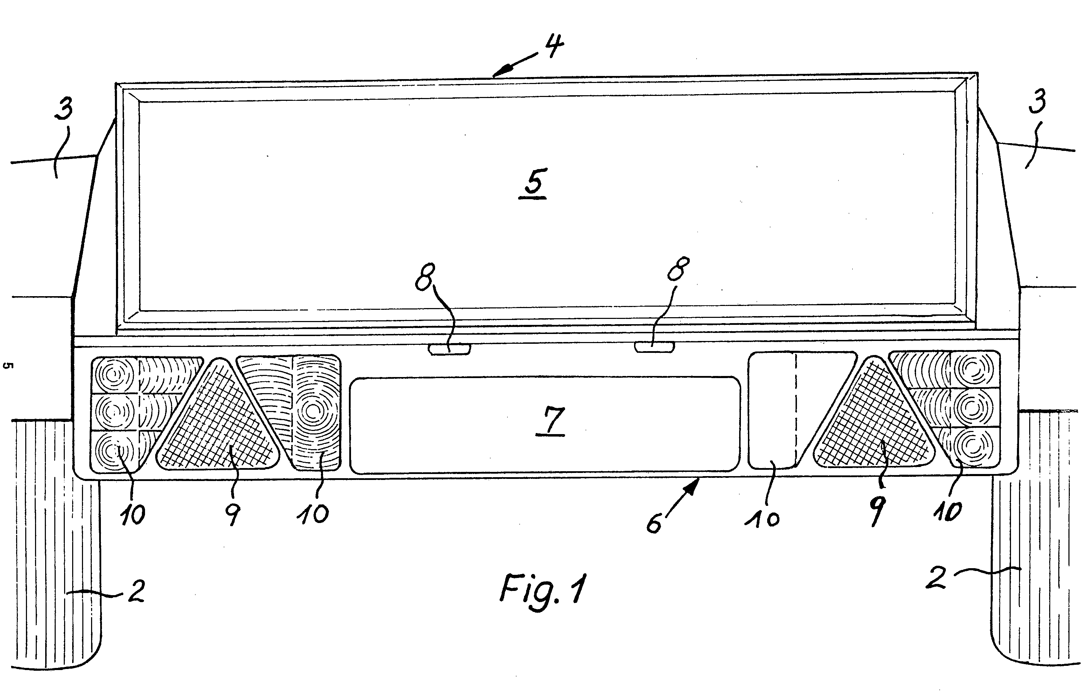

In der Fig. 1 ist ein Fahrzeug mit verhältnismäßig flachem Aufbau dargestellt, beispielsweise ein einachsiger Anhänger für Kraftfahrzeuge mit den Rädern 2, den überdeckenden Kotflügeln 3 und dem Aufbaukasten 4 mit einer rückwärtigen Ladeklappe 5. Unterhalb der Ladeklappe und auch gegebenenfalls unterhalb des Aufbaus 4 ist eine Traverse 6 angeordnet, die in der Mitte das Nummernschild 7 trägt, das bei diesem Ausführungsbeispiel von oben her von den Leuchten 8 zu beleuchten ist. An den beiden Enden beiderseits des Nummernschildes 7 sind auf der Traverse 6 die Kombinationen von dreieckigem Rückstrahler 9 und Rückleuchten angeordnet. Bei dem hier dargestellten Ausführungsbeispiel sind, den Vorschriften entsprechend, die Rückstrahler 9 als gleichseitiges Dreieck ausgebildet und beiderseits davon sind die Rückleuchtenkästen 10 als rechteckige Kästen angeordnet, und zwar senkrecht stehend. Die untere Begrenzung der rechteckigen Lichtkästen 10 liegt auf gleicher waagerechter Ebene wie die untere Begrenzung, die Basis des Rückstrahlerdreiecks 9. Die obere Begrenzung der rechteckigen Lichtkästen 10 liegt in gleicher waagerechter Ebene wie die Spitze des Rückstrahlerdreiecks 9.

Die rechteckigen Lichtkästen 10 haben an ihrem unteren Ende einen verhältnismäßig geringen Abstand von dem Rückstrahlerdreieck 9 und an ihrem oberen Ende einen verhältnismäßig großen Abstand davon. Nach dem hier dargestellten Ausführungsbeispiel sind die Lichtkästen 10 in der Höhe einmal unterteilt, so daß in jedem Lichtkasten zwei Kammern ausgebildet sind, die zur Aufnahme der unterschiedlichen Leuchten dienen, und zwar für das Rücklicht, für Stopplicht, Richtungsanzeiger usw.

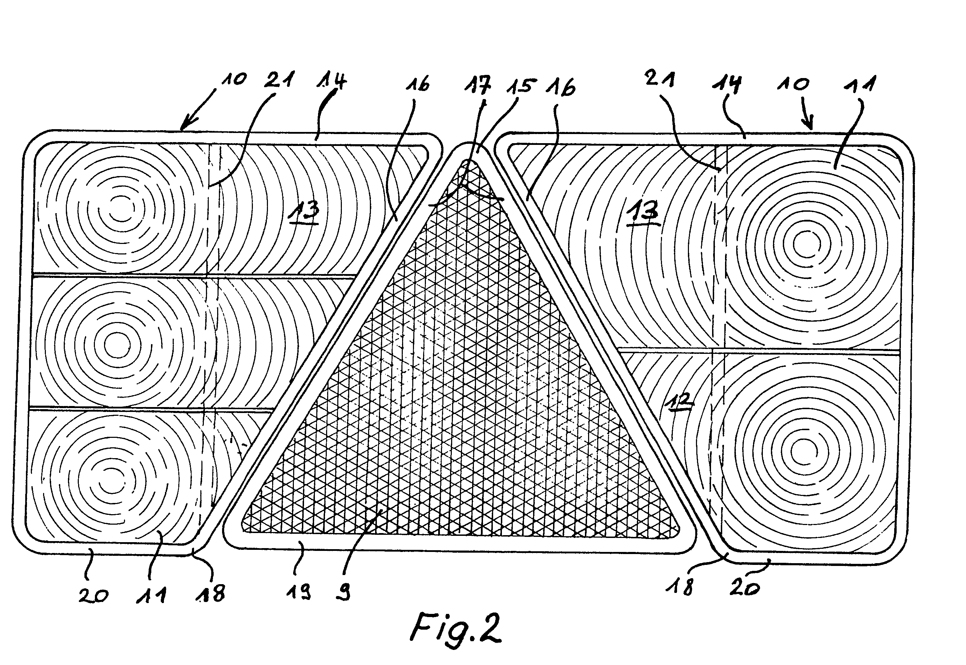

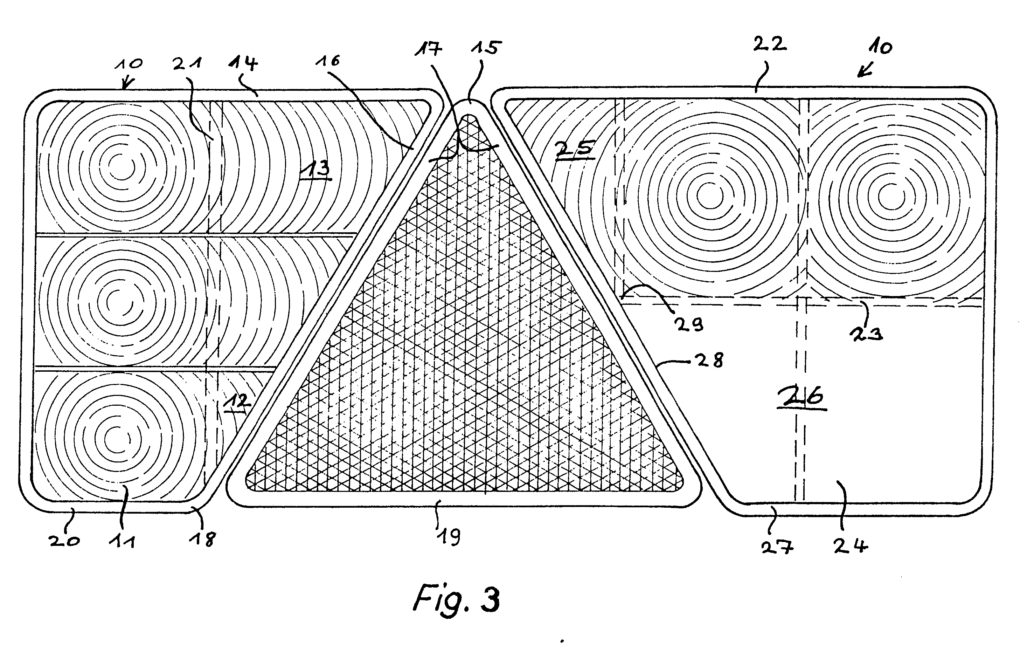

Die Abdeckung der rechteckigen, hochkant stehenden Lichtkästen 10 erfolgt bei dem Ausführungsbeispiel nach Fig. 2 und 3 durch ein übergreifendes Abdeckglas, das selbstverständlich auch aus durchsichtigem und eingefärbtem Kunststoff bestehen kann, wie das üblich ist. Dieses Abdeckglas 11 überdeckt den gesamten Lichtkasten 10 — in Richtung auf den Rückstrahler 9 ist das Abdeckglas jedoch erweitert, und zwar übergreift es den Lichtkasten mit den Bereichen 12 und 13 derart, daß die obere Begrenzung 14, die in einer waagerechten Ebene mit der Spitze 15 des Rückstrahlerdreiecks 9 liegt, bis nahe an diese Spitze 15 herangeführt ist. Die Seitenbegrenzung 16 des Abdeckglases 11 verläuft schräg, und zwar parallel zu der Seite 17 des Rückstrahlerdreiecks 9 in geringem Abstand davon bis zur unteren Ecke 18, die in gleicher waagerechter Ebene mit der Basis 19 des Rückstrahlerdreiecks 9 liegt und in die waagerechte Begrenzung 20 des Abdeckglases 11 und des Lichtkastens 10 abgewinkelt ist. Die Überstände 12 und 13 des Abdeckglases 11 setzen die Farbgebung, die beispielsweise rot oder orange über dem Lichtkasten 10 fort, so daß nach außen hin nicht erkennbar ist, ob und wieweit sich der Lichtkasten 10 in Richtung des Rückstrahlerdreiecks 9 erstreckt. Auch bei in dem Lichtkasten eingeschalteten Leuchten ist die Begrenzung des Lichtkastens nicht eindeutig erkennbar, da aufgrund der Ausbildung des Abdeckglases 11 und seiner optischen Formgebung mit Riffelungen, prismatischen Ausbildungen u. dgl. die Fläche, die nach außen hin Licht abstrahlt, wesentlich größer ist als die dem Lichtkasten über der Leuchtkammer abdeckende und unmittelbar durchstrahlte Fläche des Abdeckglases 11. Die Erweiterung der Licht abgebenden Fläche liegt in Richtung auf den Rückstrahler 9.

Nach einer anderen Ausführung entsprechend der Fig. 3 ist ein rechteckiger Lichtkasten 10 waagerecht angeordnet, und zwar derart, daß er mit einer langen Kante 22 in gleicher Ebene mit der Spitze 15 des Rückstrahlerdreiecks 9 liegt. Die untere Kante 23 liegt dann etwa in der Mitte oder auf halber Höhe des Rückstrahlerdreiecks 9. Der waagerecht liegende Lichtkasten 10 ist seiner Länge nach in einzelne nebeneinander liegende Leuchtkammern unterteilt. Dieser Unterteilung entsprechend ist auch das Abdeckglas 24 in der bekannten Weise eingefärbt.

Das Abdeckglas 24 übergreift den waagerecht liegenden Lichtkasten bei diesem Ausführungsbeispiel nicht nur nach der zum Rückstrahler 9 liegenden kurzen Seite hin mit dem Überstand 25, sondern auch nach unten hin mit dem Überstand 26 bis zu einer Begrenzungslinie 27, die in gleicher waagerechter Ebene mit der unteren Begrenzung 19 des Rückstrahlerdreiecks 9 liegt. Die schräge durchgehende Seitenkante 28 des Abdeckglases 24, die nur an einer einzigen inneren Ecke 29 den Lichtkasten 10 berührt, verläuft parallel zu der benachbarten Kante 17 des Rückstrahlerdreiecks 9 und in geringem Abstand davon.

Es ist erkennbar, daß bei der zuletzt vorbeschriebenen waagerechten Anordnung des Lichtkastens 10 die Möglichkeit besteht, in der am weitesten vom Rückstrahlerdreieck 9 entfernten Lichtkammer beispielsweise eine Rückleuchte oder eine Warnblinkleuchte unterzubringen, so daß aus etwas größerem Abstand gesehen die Leuchtfläche zusammen mit der Rückleuchte auf der Rückseite des Fahrzeuges besonders groß erscheint oder durch das vom Rückstrahler 9 zurückgeworfene Licht, das aus der davon entfernten Kammer austretende Licht der Rückleuchte nicht beeinträchtigt oder überstrahlt wird.

## Patentansprüche

1. Rückleuchten-Kombination, insbesondere für Anhänger von Kraftfahrzeugen, mit einem Rückstrahler (9), der aus einem gleichseitigen Dreieck besteht und mit einer, die Basis bildenden, waagerecht liegenden Unterkante (19) und einem daneben angeordneten rechteckigen Lichtkasten (10), dadurch gekennzeichnet, daß mindestens eine Kante (14, 22) des Lichtkastens (10) in gleicher waagerechter Ebene mit einer Höhenbegrenzung (19 oder 15) des Rückstrahlers (9) liegt und das Abdeckglas (11 oder 24) des Lichtkastens dessen rechteckige Begrenzung übergreifend, von einer, mit der benachbarten schräg verlaufenden Kante (17) des Rückstrahlers (9) parallelen Kante (16 oder 28) begrenzt ist.

2. Rückleuchten-Kombination nach Anspruch 1, dadurch gekennzeichnet, daß bei waagerechter Anordnung des rechteckigen Lichtkastens (10) das übergreifende Abdeckglas (24) durch die waagerechten Ebenen (22 und 27) begrenzt ist, die mit der Höhenbegrenzung (15 und 19) des Rückstrahlers übereinstimmen.

3. Rückleuchten-Kombination nach einem der vorstehenden Ansprüche, dadurch gekennzeichnet, daß der rechteckige Lichtkasten (10) als Mehrkammer-Lichtkasten ausgebildet ist.

4. Rückleuchten-Kombination nach Anspruch 3, dadurch gekennzeichnet, daß beiderseits des Rückstrahlers (9) ein rechteckiger Lichtkasten (10) angeordnet ist.

5. Rückleuchten-Kombination nach Anspruch 1 und einem der vorstehenden Ansprüche, dadurch gekennzeichnet, daß der rechteckige Lichtkasten (10) als Zweikammerkasten oder Dreikammerkasten ausgebildet ist.

6. Rückleuchten-Kombination nach Anspruch 5, dadurch gekennzeichnet, daß Schlußlicht und Blinklicht sowie Stopplicht und Rückfahrscheinwerfer in je einem Kasten (10) zusammengefaßt sind.

## Claims

1. Rear lights, particularly for trailers of automotive vehicles, comprising a reflector (9) consisting of an equilateral triangle and having a lower edge (19) being the base arranged horizontally and having a light box (10) of rectangular shape being arranged next to it, characterized by that at least one edge (14, 22) of the light box (10) is arranged in the same horizontal plane with a height limit (19 or 15) of the reflector (9) and that the cover glass (11 or 24) exceeding its rectangular limits is limited by an edge (16 or 28) being parallel to the adjacent sloped edge (17) of the reflector (9).

2. Rear lights according to claim 1, characterized by that, for a horizontal arrangement of the rectangular light box (10), the exceeding cover glass (24) is limited by the horizontal planes (22 and 27) coinciding with the height limits (15 and 19) of the reflector.

3. Rear lights according to one of the preceding claims, characterized by that the rectangular light box (10) is designed as multi-chamber light box.

4. Rear lights according to claim 3, characterized by that on either side of the reflector (9), a rectangular light box (10) is arranged.

5. Rear lights according to claim 1 and to one of the preceding claims, characterized by that the rectangular light box (10) is designed as a two-chamber or three-chamber box.

6. Rear lights according to claim 5, characterized by that rear light and stop light as well as blinker light and reversing light are integrated in one box (10) each.

## Revendications

1. Feux arrière, en particulier pour remorques de véhicules automobiles, comportant un catadioptre (9) ayant la forme d'un triangle équilatéral et ayant un côté inférieur (19) horizontal formant la base, et un boîtier de feux rectangulaire (10) placé à côté de lui, caractérisés par le fait qu'au moins un côté (14, 22) du boîtier de feux (10) est dans le même plan horizontal que la limite en hauteur (19 ou 15) du catadioptre (9), et que le verre (11 ou 24) qui couvre le boîtier de feux, débordant la limite rectangulaire de celui-ci, est limité par un côté (16 ou 28) parallèle au côté oblique voisin (17) du catadioptre (9).

2. Feux arrière selon la revendication 1, caractérisés par le fait qu'en cas de disposition horizontale du boîtier de feux rectangulaire (10), le verre de couverture débordant (24) est délimité par les plans horizontaux (22 et 27) qui correspondent aux limites en hauteur (15 et 19) du catadioptre.

3. Feux arrière selon l'une des revendications précédentes, caractérisés par le fait que le boîtier de feux rectangulaire (10) est à plusieurs chambres.

4. Feux arrière selon la revendication 3, caractérisés par le fait que de chaque côté du catadioptre (9) est placé un boîtier de feux rectangulaire (10).

5. Feux arrière selon la revendication 1 et l'une des revendications précédentes, caractérisés par le fait que le boîtier de feux rectangulaire (10) est à deux ou trois chambres.

6. Feux arrière selon la revendication 5, caractérisés par le fait que d'une part un feu rouge arrière et un feu clignotant et d'autre part un feu de stop et un projecteur de recul sont rassemblés dans un boîtier (10).

Fig. 1

0 049 502

Fig.2

0 049 502

Fig. 3